# EUROPEAN PATENT APPLICATION

(11) **EP 4 316 829 A1**
(43) Date of publication of application: **07.02.2024**
(21) Application number: 22775605.3
(22) Date of filing: 22.03.2022
(51) Int. Cl.: B32B 27/32, C08F 8/46, C08F 255/02, C09J 5/00, C09J 123/26, C09J 151/06

(54) **ADHESIVE COMPOSITION AND MULTILAYER BODY**

(30) Priority: 26.03.2021 JP 2021053716
(71) Applicant: Mitsui Chemicals, Inc., Tokyo 104-0028 (JP)
(72) Inventor: UTSUMI, Tatsuki, Sodegaura-shi, Chiba 299-0265 (JP); HIROTA, Yoshihito, Sodegaura-shi, Chiba 299-0265 (JP)
(74) Representative: Hoffmann Eitle
(86) International application number: PCT/JP2022/013216
(87) International publication number: WO 2022/202822

(57) **Abstract**

An adhesive composition contains a modified polyolefin resin. The polyolefin resin is obtained by modifying a polyolefin resin with an unsaturated carboxylic acid and a radically reactive aromatic compound. The polyolefin resin has a heat of fusion of 10 J/g or less, which is measured in conformity with JIS K7122. A modified content of the unsaturated carboxylic acid content with respect to the modified polyolefin resin is more than 0.5% by mass and less than 5% by mass. A modified content of the radically reactive aromatic compound with respect to the modified polyolefin resin is 0.1% by mass or more and less than 3% by mass.

## Description

### TECHNICAL FIELD

The present invention relates to an adhesive composition and a laminate.

### BACKGROUND ART

Conventionally, polyolefin resin has been used in various industrial fields, for example, the field of packaging materials.

Meanwhile, polyolefin resin has low polarity and thus has low adhesiveness to a material (highly polar material) having a higher polarity than the polyolefin resin.

Thus, in view of improving the adhesiveness of the polyolefin resin, providing a primer layer between the polyolefin resin and the highly polar material has been known.

As the material for forming the primer layer described above, for example, a modified polyolefin resin obtained by modifying a polyolefin resin with an acid anhydride of α,β-carboxylic acid and a compound having a benzene ring has been proposed (for example, see Patent Document 1).

### Citation List

### Patent Document

Patent Document 1: PCT International Publication No. WO2018/037849

### SUMMARY OF THE INVENTION

### PROBLEM TO BE SOLVED BY THE INVENTION

Meanwhile, such a primer layer is required to have higher adhesiveness.

The present invention provides an adhesive composition and a laminate, where the adhesive composition has excellent adhesion with a substrate consisting of a polyolefin resin and with a surface layer consisting of a material having a higher polarity than the polyolefin resin and has excellent coating properties.

### MEANS FOR SOLVING THE PROBLEM

The present invention [1] includes an adhesive composition including a modified polyolefin resin, wherein the modified polyolefin resin is obtained by modifying a polyolefin resin with an unsaturated carboxylic acid and a radically reactive aromatic compound, wherein the polyolefin resin has a heat of fusion of 10 J/g or less that is measured in conformity with JIS K7122, wherein a modified content of the unsaturated carboxylic acid with respect to the modified polyolefin resin is more than 0.5% by mass and less than 5% by mass, and wherein a modified content of the radically reactive aromatic compound with respect to the modified polyolefin resin is 0.1% by mass or more and less than 3% by mass.

The present invention [2] includes the adhesive composition described in the above-described [1], wherein the modified content of the radically reactive aromatic compound with respect to the modified polyolefin resin is 0.5% by mass or more.

The present invention [3] includes the adhesive composition described in the above-described [1] or [2], wherein the modified content of the unsaturated carboxylic acid with respect to the modified polyolefin resin is 1.1% by mass or more.

The present invention [4] includes a laminate comprising: a substrate consisting of a polyolefin resin; a primer layer consisting of the adhesive composition described in any one of the above-described [1] to [3]; and a surface layer consisting of a material having a higher polarity than a polarity of the polyolefin resin in sequence toward one side in a thickness direction.

### EFFECTS OF THE INVENTION

The modified polyolefin resin in the adhesive composition of the present invention is obtained by modifying a polyolefin resin with an unsaturated carboxylic acid and a radically reactive aromatic compound so that the modified polyolefin resin has a predetermined modified content. This enables the primer layer obtained by using the adhesive composition to have excellent adhesion with the substrate consisting of a polyolefin resin and with the surface layer consisting of a material having a higher polarity than that of the polyolefin resin.

Further, the polyolefin resin has a heat of fusion in a predetermined range. This enables the primer layer producing by using the adhesive composition to have excellent adhesion to the substrate consisting of a polyolefin resin.

The laminate of the present invention includes a primer layer consisting of the adhesive composition of the present invention. Thus, the laminate has excellent adhesion between the substrate consisting of the polyolefin resin and the surface layer consisting of a material having a higher polarity than the polyolefin resin.

### BRIEF DESCRIPTION OF THE DRAWINGS

FIG. 1 is a schematic view illustrating one embodiment of the laminate of the present invention.
FIG. 2A to 2C are schematic views illustrating a method of producing the laminate of the present invention. FIG. 2A illustrates a first step of preparing a polyolefin substrate. FIG. 2B illustrates a second step of disposing a primer layer on a one-side surface in the thickness direction of the polyolefin substrate. FIG. 2C illustrates a third step of disposing a surface layer on a one-side surface in the thickness direction of the primer layer.

### DESCRIPTION OF THE EMBODIMENTS

An adhesive composition contains a modified polyolefin resin.

The modified polyolefin resin is obtained by modifying a polyolefin resin with an unsaturated carboxylic acid and a radically reactive aromatic compound.

### <Polyolefin Resin>

The polyolefin resin is an olefin polymer including a structural unit derived from olefin.

Examples of the olefin include α-olefin. Examples of the α-olefin include ethylene, propylene, 1-butene, 1-pentene, 1-hexene, 4-methyl-1-pentene, 1-octene, 1-decene, 1-dodecene, 1-tetradecene, 1-hexadecene, 1-octadecene, and 1-eicosene.

As the olefin, an α-olefin having 2 or more and 6 or less carbon atoms is preferable, and ethylene, propylene, and 1-butene are more preferable.

These olefins can be used alone or in combination of two or more. The use of ethylene and propylene in combination and the use of ethylene, propylene, and 1-butene in combination are preferable. In other words, the polyolefin resin is preferably a propylene/ethylene copolymer or a propylene/1-butene/ethylene copolymer.

When the polyolefin resin is a propylene/ethylene copolymer, the content ratio of the structural unit derived from propylene is, for example, 60 mol% or more, preferably 70 mol% or more, and, for example, 90 mol% or less, preferably 80 mol% or less with respect to 100 mol% of the total amount of the structural unit derived from propylene and the structural unit derived from ethylene. Further, the content ratio of the structural unit derived from ethylene is, for example, 10 mol% or more, preferably 20 mol% or more, and, for example, 40 mol% or less, preferably 30 mol% or less.

When the polyolefin resin is a propylene/1-butene/ethylene copolymer, the content ratio of the structural unit derived from propylene is, for example, 50 mol% or more, preferably 60 mol% or more, and, for example, 80 mol% or less, preferably 70 mol% or less with respect to 100 mol% of the total amount of the structural unit derived from propylene, the structural unit derived from 1-butene, and the structural unit derived from ethylene. Further, the content ratio of the structural unit derived from 1-butene is, for example, 5 mol% or more, preferably 10 mol% or more, and, for example, 30 mol% or less, preferably 20 mol% or less. Furthermore, the content ratio of the structural unit derived from ethylene is, for example, 10 mol% or more, preferably 20 mol% or more, and, for example, 40 mol% or less, preferably 30 mol% or less.

The heat of fusion of the polyolefin resin that is measured in conformity with JIS K7122 is 10 J/g or less, preferably 5 J/g or less, more preferably 3 J/g or less, and normally 0 J/g or more.

Further, when the heat of fusion is the above-described upper limit or less, a primer layer 3 (described below) obtained by using the adhesive composition has excellent adhesion to a polyolefin substrate 2 (described below).

The method of measuring the heat of fusion is described in detail in Examples below.

Further, the polyolefin resin has a melting point of, for example, 50°C or more, preferably 60°C or more, more preferably 70°C or more, and, for example, 115°C or less, preferably 1 13°C or less, more preferably 110°C or less.

Furthermore, it may be amorphous without having the polyolefin resin.

The method for measuring the melting point is described in detail in Examples described below.

Further, the weight average molecular weight of the polyolefin resin that is calculated in terms of polystyrene measured by gel permeation chromatography (GPC) is, for example, 40000 or more, preferably 50000 or more, more preferably 55000 or more, and, for example, 500000 or less, preferably 400000 or less, more preferably 380000 or less.

The method for measuring the weight average molecular weight is described in detail in Examples described below.

The polyolefin resin may be obtained by polymerizing olefin by a known method. Further, as necessary, a metallocene catalyst may be blended in the polymerization.

### <Unsaturated Carboxylic Acid>

Examples of the unsaturated carboxylic acid include an unsaturated carboxylic acid having 3 to 8 carbon atoms. Examples of the unsaturated carboxylic acid having 3 to 8 carbon atoms include a monobasic acid and a dibasic acid. Examples of the monobasic acid include (meth)acrylic acid (acrylic acid and/or methacrylic acid), crotonic acid, and isocrotonic acid. Examples of the dibasic acid include maleic acid, fumaric acid, itaconic acid, citraconic acid, mesaconic acid, glutaconic acid, allylsuccinic acid, nadic acid, methylnadic acid, tetrahydrofumaric acid, and methylhexahydrophthalic acid.

Further, examples of the unsaturated carboxylic acid include acid anhydrides of the above-described unsaturated carboxylic acids.

As the unsaturated carboxylic acid, an acid anhydride of an unsaturated carboxylic acid is preferable, an acid anhydride of a dibasic acid is more preferable, and a maleic anhydride is even more preferable.

These unsaturated carboxylic acids can be used alone or in combination of two or more.

Further, a modified content of the unsaturated carboxylic acid with respect to the modified polyolefin resin is more than 0.5% by mass, preferably 1.1% by mass or more, and, less than 5% by mass, preferably 3% by mass or less, more preferably 2% by mass or less.

When the above-described modified content is the above-described lower limit or more, the primer layer 3 (described below) obtained by using the adhesive composition has excellent adhesion to a surface layer 4 (described below), and excellent adhesion to the polyolefin substrate 2 (described below). The adhesion to the surface layer 4 (described below) is particularly excellent. Further, in particular, when the above-described modified content is 1.1% by mass or more, the primer layer 3 has even more excellent adhesion.

Further, when the above-described modified content is the above-described upper limit or less, the primer layer 3 (described below) obtained by using the adhesive composition has excellent adhesion to the surface layer 4 (described below) and excellent adhesion to the polyolefin substrate 2 (described below). The adhesion to the polyolefin substrate 2 (described below) is particularly excellent.

The above-described modified content can be obtained, for example, from the blending ratios of the components for preparing the modified polyolefin resin, or can be confirmed by a known method such as ¹H-NMR measurement of the modified polyolefin resin.

### <Radically Reactive Aromatic Compound>

A radically reactive aromatic compound is a compound having a portion that can be radically added and an aromatic ring in combination.

Examples of the radically reactive aromatic compound include a radically polymerizable double bond-containing aromatic compound and a radically reactive aromatic hydrocarbon.

The radically polymerizable double bond-containing aromatic compound is a compound having a radically polymerizable double bond and an aromatic ring in combination.

Examples of the radically polymerizable double bond-containing aromatic compound include an aromatic vinyl compound and an aromatic ring-containing (meth)acrylate. Examples of the aromatic vinyl compound include styrene, α-methylstyrene (2-phenylpropylene), 2-phenylbutene, 3-phenylpropylene, divinylbenzene, 1-vinylnaphthalene, p-methylstyrene, m-methylstyrene, o-methylstyrene, p-ethylstyrene, m-ethylstyrene, o-ethylstyrene, 2,4-dimethylstyrene, 2,5-dimethylstyrene, 3,4-dimethylstyrene, 3,5-dimethylstyrene, 3-methyl-5-ethylstyrene, p-tert-butylstyrene, p-sec-butylstyrene, p-chlorostyrene, p-vinylbenzoic acid, p-vinylbenzoate, and vinylbenzoic acid. Examples of the aromatic ring-containing (meth)acrylate include phenyl (meth)acrylate, benzyl (meth)acrylate, phenoxyethyl (meth)acrylate, and trityl (meth)acrylate.

Examples of the radically reactive aromatic hydrocarbon include toluene, xylene, and ethylbenzene.

As the radically reactive aromatic compound, a radically polymerizable double bond-containing aromatic compound is preferable, an aromatic vinyl compound is more preferable, and styrene is even more preferable.

A modified content of the radically reactive aromatic compound with respect to the modified polyolefin resin is 0.1% by mass or more, preferably 0.5% by mass or more, more preferably 1.0% by mass or more, and, for example, less than 3% by mass, preferably 2% by mass or less, more preferably 1.5% by mass or less, even more preferably 1.1% by mass or less.

When the above-described modified content is the above-described lower limit or more, the primer layer 3 (described below) obtained by using the adhesive composition has excellent adhesion to the polyolefin substrate 2 (described below). Further, in particular, when the above-described modified content is 0.5% by mass or more, the primer layer 3 has even more excellent adhesion.

Further, when the above-described modified content is the above-described upper limit or less, the increase in the viscosity of the adhesive composition can be suppressed. And thus, the adhesive composition has excellent coating properties (specifically, spray coating properties).

The above-described modified content can be obtained, for example, from the blending ratios of the components for preparing the modified polyolefin resin, or can be confirmed by a known method such as ¹H-NMR measurement of the modified polyolefin resin.

### <Preparation of Modified Polyolefin Resin>

The modified polyolefin resin is obtained by modifying a polyolefin resin with an unsaturated carboxylic acid and a radically reactive aromatic compound.

Specifically, an unsaturated carboxylic acid and a radically reactive aromatic compound are subjected to a polymerization reaction under the presence of a polyolefin resin. In this manner, the polyolefin resin is graft modified with the unsaturated carboxylic acid and the radically reactive aromatic compound.

The reaction is carried out at a reaction temperature of, for example, 50°C or more, preferably 80°C or more, and, for example, 250°C or less. The reaction is carried out for a reaction time of, for example, 1 minute or more and 10 hours or less.

Further, in the above-described reaction, as necessary, a radical polymerization initiator is blended in an appropriate ratio.

Examples of the radical polymerization initiator include organic peroxides such as benzoyl peroxide, dichlorobenzoyl peroxide, dicumyl peroxide, di-tert-butyl peroxide, 2,5-dimethyl-2,5-di(peroxybenzoate)hexine-3, 1,4-bis(tert-butylperoxy isopropyl)benzene, lauroyl peroxide, tert-butyl peracetate, 2,5-dimethyl-2,5-di(tert-butylperoxy)hexine-3, 2,5-dimethyl-2,5-di(tert-butylperoxy)hexane, tert-butyl benzoate, tert-butyl perphenyl acetate, tert-butyl perisobutyrate, tert-butyl per-sec-octoate, tert-butyl perpivalate, cumyl perpivalate, and tert-butyl perdiethyl acetate, and azo compounds such as azo bis-isobutyl nitrile and dimethyl azo isobutyl nitrile.

As the radical polymerization initiator, dialkyl peroxides, such as dicumyl peroxide, di-tert-butyl peroxide, 2,5-dimethyl-2,5-di(tert-butylperoxy)hexine-3, 2,5-dimethyl-2,5-di(tert-butylperoxy)hexane, and 1,4-bis(tert-butylperoxy isopropyl)benzene, are preferable.

Further, the above-described reaction is carried out under the presence of a solvent or without a solvent.

A known solvent may be selected as the solvent.

In this manner, a modified polyolefin resin is obtained. Further, when the above-described reaction is carried out under the presence of a solvent, the obtained modified polyolefin resin is prepared as a varnish.

The modified polyolefin resin has a melting point of, for example, 50°C or more, preferably 60°C or more, more preferably 70°C or more, and, for example, 115°C or less, preferably 113°C or less, more preferably 110°C or less.

Alternatively, it may be amorphous without having a modified polyolefin resin.

The method for measuring the melting point is described in detail in Examples described below.

The weight average molecular weight of the modified polyolefin resin that is calculated in terms of polystyrene measured by gel permeation chromatography (GPC) is, for example, 40000 or more, preferably 50000 or more, more preferably 55000 or more, and, for example, 500000 or less, preferably 400000 or less, more preferably 380000 or less.

The method for measuring the weight average molecular weight is described in detail in Examples below.

Then, the adhesive composition contains the above-described modified polyolefin resin and a solvent that is blended as necessary.

When the adhesive composition contains a solvent, the concentration of the solid content of the modified polyolefin resin is, for example, 1.0% by mass or more, preferably 3.0% by mass or more, and, for example, 30% by mass or less, preferably 20% by mass or less.

Although described in detail below, the primer layer 3 (described below) obtained by using the adhesive composition has both of excellent adhesion to the polyolefin substrate 2 (described below) and excellent adhesion to the surface layer 4 (described below). Thus, the adhesive composition is suitably used for forming the primer layer disposed between the polyolefin substrate 2 (described below) and the surface layer 4 (described below).

A laminate 1 including the primer layer 3 (described below) obtained by using the adhesive composition is described in detail below.

### <Laminate>

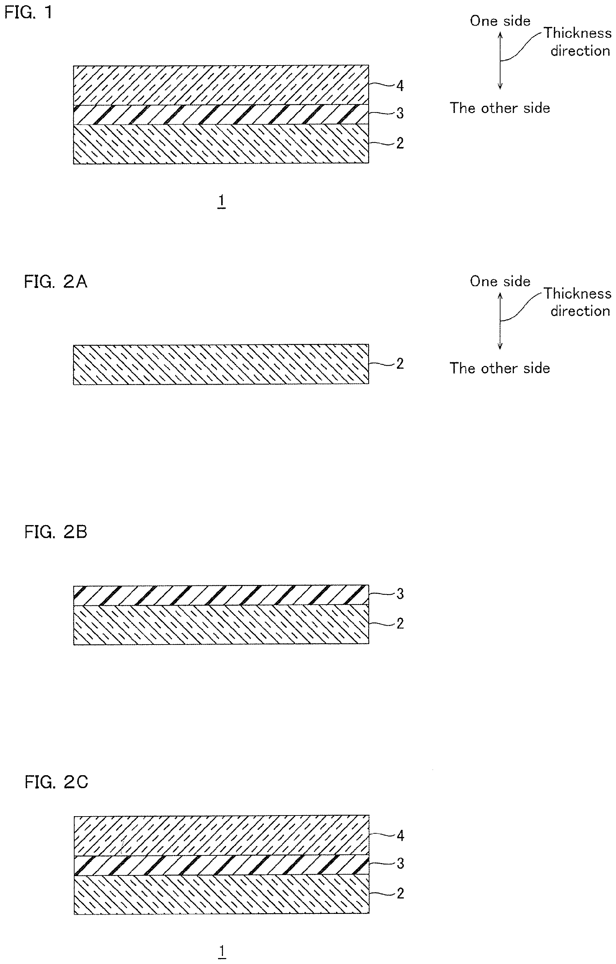

With reference to FIG. 1, an embodiment of the laminate of the present invention is described.

The up-and-down direction (thickness direction) of the drawing sheet of FIG. 1 is the up-and-down direction. The upper side of the drawing sheet is the upper side (one side in the thickness direction), and the lower side of the drawing sheet is the low side (the other side in the thickness direction). Further, the right-and-left direction and depth direction of the drawing sheet are a surface direction orthogonal to the up-and-down direction. Specifically, the directions are in accordance with the arrow in each drawing.

The laminate 1 has a film shape (including a sheet shape) having a predetermined thickness as illustrated in FIG. 1. The laminate 1 extends in the surface direction orthogonal to the thickness direction. The laminate 1 has a flat upper surface and a flat lower surface.

The laminate 1 includes the polyolefin substrate 2, the primer layer 3, and the surface layer 4 in sequence toward the one side in the thickness direction. Specifically, the laminate 1 includes the polyolefin substrate 2, the primer layer 3 disposed directly on an upper surface (one-side surface in the thickness direction) of the polyolefin substrate 2, and the surface layer 4 disposed directly on an upper surface (one-side surface in the thickness direction) of the primer layer 3.

### <Polyolefin Substrate>

The polyolefin substrate 2 has a film shape. The polyolefin substrate 2 is disposed on the whole of a lower surface of the primer layer 3 to be in contact with the lower surface of the primer layer 3.

The polyolefin substrate 2 consists of a polyolefin resin.

Examples of the polyolefin resin include the examples of the polyolefin resin cited in the above description of the adhesive composition.

### <Primer Layer>

The primer layer 3 has a film shape. The primer layer 3 is disposed on the whole of a lower surface of the surface layer 4 to be in contact with the lower surface of the surface layer 4.

The primer layer 3 is formed of the adhesive composition.

Although described in detail below, the primer layer 3 is obtained by applying the adhesive composition to the one-side surface in the thickness direction of the polyolefin substrate 2.

The primer layer 3 has a thickness of, for example, 1 µm or more, and, for example, 5 µm or less.

### <Surface Layer>

The surface layer 4 has a film shape. The surface layer 4 is disposed on the whole of the upper surface of the primer layer 3 to be in contact with the upper surface of the primer layer 3. The surface layer 4 is the uppermost layer of the laminate 1.

The surface layer 4 consists of a material (highly polar material) having a higher polarity than that of the polyolefin resin.

Examples of the highly polar material described above include a resin with an ether bond, a resin with an ester bond, a resin with an amide bond, a resin with an imide bond, and a resin with a urethane bond. Specifically, examples of the resin include acrylic resin, polyamide resin, polyimide resin, polyurethane resin, and vinyl chloride vinyl acetate-based copolymer resin, and acrylic resin and vinyl chloride·vinyl acetate-based copolymer resin are preferable.

The surface layer 4 has a thickness of, for example, 6 µm or more, and, for example, 20 µm or less.

### <Method of Producing Laminate>

A method of producing the laminate 1 include a first step of preparing the polyolefin substrate 2, a second step of disposing the primer layer 3 on the one-side surface in the thickness direction of the polyolefin substrate 2, and a third step of disposing the surface layer 4 on the one-side surface in the thickness direction of the primer layer 3.

In the first step, as illustrated in FIG. 2A, the polyolefin substrate 2 is prepared.

In the second step, as illustrated in FIG. 2B, the primer layer 3 is disposed on the one-side surface in the thickness direction of the polyolefin substrate 2.

To dispose the primer layer 3 on the one-side surface in the thickness direction of the polyolefin substrate 2, the above-described adhesive composition (a varnish of the modified polyolefin resin) is applied to the one-side surface in the thickness direction of the polyolefin substrate 2 and, as necessary, dried. In this manner, the primer layer 3 is disposed (formed) on the one-side surface in the thickness direction of the polyolefin substrate 2.

The method of applying the adhesive composition is not especially limited. However, in view of productivity, spray coating is preferable.

The conditions for drying the applied adhesive composition are not especially limited as long as the components to be volatilized, such as an organic solvent, in the adhesive composition are volatilized. However, the drying temperature is, for example, 200°C or less, preferably 150°C or less, and, for example, 10°C or more. Further, the drying time is, for example, 3 seconds or more, preferably 1 minute or more, and, for example, 1 hour or less.

In the third step, as illustrated in FIG. 2C, the surface layer 4 is disposed on the one-side surface in the thickness direction of the primer layer 3.

The material of the surface layer 4 is applied to the one-side surface in the thickness direction of the primer layer 3 and, as necessary, dried. In this manner, the surface layer 4 is disposed (formed) on the one-side surface in the thickness direction of the primer layer 3.

The conditions for drying the material of the surface layer 4 are not especially limited as long as the components to be volatilized, such as an organic solvent, in the material are volatilized. However, the drying temperature is, for example, 200°C or less, preferably 150°C or less, and, for example, 10°C or more. Further, the drying time is, for example, 3 seconds or more, preferably 1 minute or more, and, for example, 1 hour or less.

In this manner, the laminate 1 is produced.

### <Operation and Effect>

The modified polyolefin resin in the adhesive composition is a polyolefin resin modified with an unsaturated carboxylic acid and a radically reactive aromatic compound so that the modified polyolefin resin has a predetermined modified content. In this manner, the primer layer 3 obtained by using the adhesive composition has excellent adhesion to the polyolefin substrate 2 and excellent adhesion to the surface layer 4.

In detail, when the modified content of an unsaturated carboxylic acid increases, the polarity of the primer layer 3 increases. Whereas the adhesion to the surface layer 4 having a relatively high polarity increases, the adhesion to the polyolefin substrate 2 having a relatively low polarity is prone to decrease.

Where the modified content of a radically reactive aromatic compound increases, the coating properties are prone to decrease whereas the adhesion to the polyolefin substrate 2 increases.

In the adhesive composition, both of the modified content of an unsaturated carboxylic acid and the modified content of a radically reactive aromatic compound are adjusted to predetermined ranges. In this manner, the coating properties of the adhesive composition increase while the primer layer 3 obtained by using the adhesive composition has excellent adhesion to the polyolefin substrate 2 and excellent adhesion to the surface layer 4. As a result, through the primer layer 3, the polyolefin substrate 2 having a relatively low polarity and the surface layer 4 having a relatively high polarity can be adhered to each other.

The polyolefin resin has a heat of fusion in a predetermined range. In this manner, the primer layer 3 obtained by using the adhesive composition has excellent adhesion to the polyolefin substrate 2.

On the other hand, the modified polyolefin resin of Patent Document 1 is obtained by modifying a polyolefin resin with an acid anhydride of α,β-carboxylic acid (specifically, maleic anhydride) and a compound having a benzene ring (specifically, benzylamine). In detail, first, the polyolefin resin is graft modified with a maleic anhydride. Thereafter, the carboxyl group of the maleic anhydride of which ring is opened by the modification is reacted with the amino group of the benzylamine. This causes the benzylamine to inhibit the adhesion to the polyolefin substrate 2.

On the other hand, in the modified polyolefin resin of the present invention, both of the unsaturated carboxylic acid and the radically reactive aromatic compound are graft modified with the polyolefin resin by the radical reaction.

In other words, in the modified polyolefin resin of the present invention, both of the unsaturated carboxylic acid and the radically reactive aromatic compound are graft modified with respect to one molecule of the polyolefin resin. This is distinguished from a mixture in which the unsaturated carboxylic acid is graft modified with respect to one molecule of the polyolefin resin and the radically reactive aromatic compound is graft modified with respect to one molecule of polyolefin resin. In this manner, the radically reactive aromatic compound is efficiently introduced to the polyolefin resin, and thus the adhesion to the polyolefin substrate 2 improves.

Further, the laminate 1 includes the primer layer 3 consisting of the above-described adhesive composition. Thus, the adhesion between the polyolefin substrate 2 and the surface layer 4 is excellent.

The laminate 1 is suitably used in various fields such as the field of packaging materials.

In the above description, the surface layer 4 is a single layer. Alternatively, the surface layer 4 may be multi-layered (for example, two or more-layered, preferably, two-layered or three-layered).

In the above description, the polyolefin substrate 2 is in the shape of a film. However, the shape of the polyolefin substrate 2 is not limited to the above and may be board-shaped. Example

The present invention is described next with reference to Examples and Comparative Examples. The present invention is, however, not limited to Examples in any way. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

### 1. Preparation of Adhesive Composition

### Example 1

Into a stirrer-equipped autoclave with an internal volume of 1.0 L, 100 parts by mass of a propylene· ethylene copolymer (PER) having a propylene unit content of 79 mol% and an ethylene unit content of 21 mol% and 516 parts by mass of butyl acetate were inserted. The temperature of the solution in the autoclave was raised to 145°C while the solution was being stirred, and the propylene/ethylene copolymer was completely dissolved.

Thereafter, while the temperature of the solution was kept at 145°C and the solution was being stirred, 6 parts by mass of a maleic anhydride, 1.5 parts by mass of styrene, and 3.6 parts by mass of a di-tert-butyl peroxide were added dropwise thereto for 6 hours. After the completion of the dropwise addition, the solution was further stirred at 145°C for 3 hours to carry out the reaction. Next, the obtained solution was cooled to 80°C and thereafter diluted with 774 parts by mass of methyl cyclohexane. Next, the solution was cooled to room temperature and diluted with 1290 parts by mass of toluene so that the solid content of the solution became 4%. In this manner, an adhesive composition containing a modified polyolefin resin was produced.

### Examples 2 to 4 and Comparative Examples 1 to 6

In the same manner as Example 1, adhesive compositions containing a modified polyolefin resin were produced.

However, the formulations were changed in accordance with Table 1.

Further, in Example 4, a propylene· butene· ethylene copolymer (PBER) having a propylene unit content of 66 mol%, a butene unit content of 13 mol%, and an ethylene unit content of 21 mol% was used.

Furthermore, in Comparative Example 5, a propylene· butene· ethylene copolymer (PBER) having a propylene unit content of 63 mol%, a butene unit content of 23 mol%, and an ethylene unit content of 14 mol% was used.

Furthermore, in Comparative Example 6, a propylene· ethylene copolymer (PER) having a propylene unit content of 85 mol% and an ethylene unit content of 15 mol% was used.

### Comparative Example 7

Into a stirrer-equipped autoclave with an internal volume of 1.0 L, 50 parts by mass of a propylene· ethylene copolymer having a propylene unit content of 79 mol% and an ethylene unit content of 21 mol% and 261.6 parts by mass of butyl acetate were inserted. The temperature of the solution in the autoclave was raised to 145°C while the solution was being stirred, and the propylene· ethylene copolymer was completely dissolved.

Thereafter, while the temperature of the solution was kept at 145°C and the solution was being stirred, 6 parts by mass of a maleic anhydride and 3.6 parts by mass of a di-tert-butyl peroxide were added dropwise thereto for 6 hours. After the completion of the dropwise addition, the solution was further stirred at 145°C for 3 hours to carry out the reaction. Next, the obtained solution was cooled to 80°C and thereafter diluted with 392.4 parts by mass of methyl cyclohexane. Next, the solution was cooled to room temperature, thereby producing a solution X. Next, except that 6 parts by mass of the maleic anhydride was changed to 3 parts by mass of styrene, the same operation to produce the solution X was carried out, thereby producing a solution Y.

The solution X and the solution Y were mixed at room temperature, and thereafter diluted with 1308 parts by mass of toluene so that the solid content of the mixture became 4%, thereby producing an adhesive composition.

### Comparative Example 8

Into a stirrer-equipped autoclave with an internal volume of 1.0 L, 100 parts by mass of a propylene· ethylene copolymer having a propylene unit content of 79 mol% and an ethylene unit content of 21 mol% and 537.6 parts by mass of butyl acetate were inserted. The temperature of the solution in the autoclave of the autoclave was raised to 145°C while the solution was being stirred, and the propylene/ethylene copolymer was completely dissolved.

Next, while the temperature of the solution was kept at 145°C and the solution was being stirred, 6 parts by mass of a maleic anhydride and 3.6 parts by mass of a di-tert-butyl peroxide were added dropwise thereto for 6 hours. After the completion of the dropwise addition, the solution was further stirred at 145°C for 3 hours to carry out the reaction. The obtained solution was cooled to 135°C, and thereafter 6 parts by mass of benzylamine was added to the solution, and the solution was further stirred for 2 hours. The solution was cooled to 80°C and thereafter diluted with 806.4 parts by mass of methylcyclohexane. Next, the solution was cooled to room temperature and diluted with 1344 parts by mass of toluene so that the solid content of the solution became 4%, thereby producing an adhesive composition.

### 2. Measurement of Heat of Fusion

The heat of fusion of the polyolefin resin used in each of Examples and Comparative Examples was obtained using a differential scanning calorimeter (manufactured by TA Instruments; DSC-Q1000).

In the process of increasing the temperature of the polyolefin resin from 30°C to 180°C at 10°C/min, then decreasing to 0°C at 10°C/min, and increasing again to 150°C at 10°C/min, the melting point and the heat of fusion of the polyolefin resin were obtained from the thermogram at the second temperature increase in conformity with JIS K 7122. The results are shown in Table 1.

### 3. Measurement of Modified Content

The modified content of an unsaturated carboxylic acid with respect to the polyolefin resin and the modified content of a radically reactive aromatic compound with respect to the polyolefin resin were measured with ¹H-NMR measurement under the following conditions. The results are shown in Table 1.

### [Measurement Conditions]

Device: manufactured by JEOL Ltd. ECX400 Nuclear Magnetic Resonance Spectrometer
Solvent: Deuterated Ortho Dichlorobenzene
Sample Concentration: 20 mg/0.6mL
Measurement temperature: 120°C
Observation Nuclear: 1H (400 MHz)
Sequence: Single Pulse
Pulse width: 5.12 µseconds (45° pulse)
Repetition time: 7.0 seconds
Total times: 500 times or more

The chemical shift standard was that the hydrogen of the tetramethylsilane was set to 0 ppm (when the peak derived from the remaining hydrogen of the deuterated orthodichlorobenzene is set to 7.10 ppm as the standard value of the chemical shift, the same results are obtained). The peak, for example, in 1H derived from a functional group-containing compound was assigned by a general method.

### 4. Measurement of Melting Point

The melting point of the polyolefin resin used in each Example and the melting point of the modified polyolefin resin used in each Example were measured. Specifically, in the process of increasing the temperature of the polyolefin resin or the modified polyolefin resin from 25°C to 200°C at 10°C/min, then keeping at 200°C for 3 minutes, decreasing to 0°C at 10°C/min, and increasing again to 200°C at 10°C/min, the melting point was obtained from the thermogram at the second temperature increase with a differential scanning calorimeter (manufactured by TA Instruments; DSC-Q1000) in conformity with JIS K 7122. The results are shown in Table 1.

### 5. Weight Average Molecular Weight

The weight average molecular weight of the polyolefin resin used in each Example and the weight average molecular weight of the modified polyolefin resin used in each Example were measured. Specifically, the weight average molecular weights were measured by a GPC method under the following measurement conditions. The results are shown in Table 1.
Detector: manufactured by SHIMADZU CORPORATION; C-R4A
Column: TSKG 6000H-TSKG 4000H-TSKG 3000H-TSKG 2000H (manufactured by Tosoh Corporation)
Mobile Phase: Tetrahydrofuran
Column Temperature: 40°C
Flow Rate: 0.8 ml/min
Mw was calculated using a calibration curve generated from monodisperse polystyrene standards.

### 6. Production of Laminate

### [Production of Laminate A]

### <First Step>

A polypropylene plate was prepared.

### <Second Step>

The adhesive composition of each of Examples and Comparative Examples was spray applied onto a one-side surface in the thickness direction of a polypropylene plate and dried at 60°C for 2 minutes. In this manner, a primer layer with a thickness of 2 µm to 3 µm was formed.

### <Third Step>

An acrylic paint was spray applied onto a one-side surface in the thickness direction of the primer layer and dried at 60°C for 3 minutes. Next, the acrylic paint was cured by UV irradiation. In this manner, a surface layer with a thickness of 10 µm to 15 µm was formed. As described above, a laminate A was produced.

### [Production of Laminate B]

A laminate B was produced through the same steps as the production of the laminate A.

However, the third step was changed as follows.

A paint consisting of vinyl chloride vinyl acetate-based copolymer resin was spray applied onto the one-side surface in the thickness direction of the primer layer and dried at 60°C for 3 minutes. In this manner, a first surface layer with a thickness of 5 µm to 6 µm was formed. Next, an acrylic paint was spray applied onto the one-side surface in the thickness direction of the surface layer and dried at 60°C for 3 minutes. Next, the acrylic paint was cured by UV irradiation. In this manner, a second surface layer with a thickness of 10 µm to 15 µm was formed. As described above, a laminate B was produced.

### 7. Evaluation

### [Adhesion]

A lattice pattern (at 2-mm intervals, 100 squares) was cut into the surface layer of the laminate A and the surface layer of the laminate B in each of Examples and Comparative Examples, and a peeling test was carried out by removing the polypropylene plate or the surface layer with a cellulose pressure-sensitive tape. The adhesion rate (the number of the squares remaining on the substrate) was used to evaluate the adhesion.

In detail, the adhesion (PP adhesion) between the polypropylene adhesion layer and the primer layer, the adhesion (acryl adhesion) between the surface layer consisting of acrylic paint and the primer layer, and the adhesion (vinyl chloride vinyl acetate-based copolymer resin adhesion) between the surface layer consisting of a vinyl chloride vinyl acetate-based copolymer resin and the primer layer were evaluated by the following criteria. For Comparative Example 4, the adhesive composition was not able to be spray applied, and thus the adhesion thereof was not evaluated.

### <PP Adhesion>

For the laminate A and the laminate B of each of Examples and Comparative Examples, a cross-cut test was carried out to evaluate the adhesion rate between the propylene plate and the primer layer, and the PP adhesion was determined by the following criteria. The results are shown in Table 1.
Good: The average of the adhesion rates was 100.
Fair: The average of the adhesion rates was less than 100 and 90 or more.
Bad: The average of the adhesion rates was less than 90.

### <Acryl Adhesion>

For the laminate A of each of Examples and Comparative Examples, a cross-cut test was carried out to evaluate the adhesion rate between the primer layer and the surface layer (acryl layer), and the acryl adhesion was determined by the following criteria. The results are shown in Table 1.
Good: The adhesion rate was 100.
Fair: The adhesion rate was less than 100 and 90 or more.
Bad: The adhesion rate was less than 90.

### <Vinyl Chloride· Vinyl Acetate-based Copolymer Resin Adhesion>

For the laminate B of each of Examples and Comparative Examples, a cross-cut test was carried out to evaluate the adhesion rate between the primer layer and the surface layer (vinyl chloride vinyl acetate-based copolymer resin layer), and the vinyl chloride vinyl acetate-based copolymer resin adhesion was determined by the following criteria. The results are shown in Table 1.
Good: The adhesion rate was 100.
Fair: The adhesion rate was less than 100 and 90 or more.
Bad: The adhesion rate was less than 90.

### [Suitability for Spray Coating]

For the adhesive composition of each of Examples and Comparative Examples, the B-type viscosity was measured, and the suitability for spray coating was determined by the following criteria.
Good: The viscosity was less than 40 mPa·s. It was determined that the adhesive composition was able to be spray applied.
Bad: The viscosity was 40 mPa·s or more. It was determined that the adhesive composition was not able to be spray applied.

### [Table 1]

**Table 1**

| Example- Comparative Example No. | | Ex. 1 | Ex. 2 | Ex. 3 | Ex. 4 | Comp, Ex. 1 | Comp. Ex. 2 | Comp. Ex. 3 | Comp, Ex. 4 | Comp. Ex. 5 | Comp. Ex. 6 | Comp. Ex. 7 | | Comp. Ex. 8 |
|---|---|---|---|---|---|---|---|---|---|---|---|---|---|---|
| Polyolefin Resin | | PER | PER | PER | PBER | PER | PER | PER | PER | PBER | PER | PER | PER | PER |
| Unsaturated Carboxylic Acid | Maleic Anhydride | 6.0 | 3.0 | 6.0 | 6.0 | 1.5 | 6.0 | 15.0 | 6.0 | 6.0 | 6.0 | 6.0 | - | 6.0 |
| Radically Reactive Aromatic Compound | Styrene | 1.5 | 3.0 | 3.0 | 3.0 | - | - | 3.0 | 10.0 | 3.0 | 3.0 | - | 3.0 | - |
| Benzylamine | | - | - | - | - | - | - | - | - | - | - | - | - | 6.0 |
| Solvent | Butyl Acetate | 516 | 508.8 | 523.2 | 523.2 | 487.2 | 508.8 | 566.4 | 556.8 | 523.2 | 523.2 | 261.6 | 261.6 | 537.6 |
| | Methyl Cyclohexane | 774 | 763.2 | 784.8 | 784.8 | 730.8 | 763.2 | 849.6 | 835.2 | 784.8 | 784.8 | 392.4 | 392.4 | 806.4 |
| | Toluene | 1290 | 1272 | 1308 | 1308 | 1218 | 1272 | 1416 | 1392 | 1308 | 1308 | 1308 | | 1344 |
| Heat of Fusion (J/g) | | 2.0 | 2.0 | 2.0 | 0.0 | 2.0 | 2.0 | 2.0 | 2.0 | 10.2 | 18.0 | 2.0 | 2.0 | 2.0 |
| Melting Point of Polyolefin Resin (°C) | | 107 | 107 | 107 | Absence | - | - | - | - | - | - | - | - | - |
| Melting Point of Modified Polyolefin Resin (°C) | | 103 | 104 | 105 | Absence | - | - | - | - | - | - | - | - | - |
| Weight Average Molecular Weight of Polyolefin Resin | | 320000 | 320000 | 320000 | 300000 | - | - | - | - | - | - | - | - | - |
| Weight Average Molecular Weight of Modified Polyolefin Resin | | 102000 | 102000 | 115000 | 77000 | - | - | - | - | - | - | - | - | - |
| Solid Content Concentration (% by mass) | | 4.0 | 4.0 | 4.0 | 4.0 | 4.0 | 4.0 | 4.0 | 4.0 | 4.0 | 4.0 | 4.0 | | 4.0 |
| Modified Content of Unsaturated Carboxylic Acid with Respect to Modified Polyolefin Resin (% by mass) | | 1.7 | 1.0 | 2.0 | 1.5 | 0.5 | 2.0 | 5.0 | 1.7 | 1.5 | 1.6 | 2.0 | | 1.6 |
| Modified Content of Radically Polymerizable Double Bond-containing Aromatic Compound with Respect to Modified Polyolefin Resin (% by mass) | | 0.4 | 0.8 | 1.0 | 0.7 | - | - | 0.7 | 3.0 | 0.6 | 0.8 | 0.7 | | 0.6 |
| Evaluation | PP Adhesion | Fair | Good | Good | Good | Fair | Bad | Bad | - | Bad | Bad | Bad | Bad | Bad |
| | Acryl Adhesion | Good | Fair | Good | Good | Bad | Good | Fair | - | Good | Good | Good | Good | Good |
| | Vinyl Chloride·Vinyl Acetate-based Copolymer Resin Adhesion | Good | Fair | Good | Good | Bad | Good | Fair | - | Good | Good | Good | Good | Good |
| | Suitability for Spray Coating | Good | Good | Good | Good | Good | Good | Good | Bad | Good | Good | Good | Good | Good |

| | | | | | | | | | | | | | | |
|---|---|---|---|---|---|---|---|---|---|---|---|---|---|---|
| "Content Modified with Benzylamine with Respect to Polyolefin Resin (% by mass) | | | | | | | | | | | | | | |

While illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The adhesive composition and laminate of the present invention are suitably used, for example, as a packaging material.

### Description of Reference Numerals

- 1: laminate
- 2: substrate
- 3: primer layer
- 4: surface layer

## Claims

1. An adhesive composition comprising a modified polyolefin resin,
wherein the modified polyolefin resin is obtained by modifying a polyolefin resin with an unsaturated carboxylic acid and a radically reactive aromatic compound,
wherein the polyolefin resin has a heat of fusion of 10 J/g or less that is measured in conformity with JIS K7122,
wherein a modified content of the unsaturated carboxylic acid with respect to the modified polyolefin resin is more than 0.5% by mass and less than 5% by mass, and
wherein a modified content of the radically reactive aromatic compound with respect to the modified polyolefin resin is 0.1% by mass or more and less than 3% by mass.

2. The adhesive composition according to claim 1, wherein the modified content of the radically reactive aromatic compound with respect to the modified polyolefin resin is 0.5% by mass or more.

3. The adhesive composition according to claim 1, wherein the modified content of the unsaturated carboxylic acid with respect to the modified polyolefin resin is 1.1% by mass or more.

4. A laminate comprising:
a substrate consisting of a polyolefin resin;
a primer layer consisting of the adhesive composition according to claim 1; and
a surface layer consisting of a material having a higher polarity than a polarity of the polyolefin resin
in sequence toward one side in a thickness direction.
